# FASCICULE DE BREVET EUROPEEN

(11) **EP 2 862 366 B1**
(45) Date de publication et mention de la délivrance du brevet: **13.12.2017**
(21) Numéro de dépôt: 13739750.1
(22) Date de dépôt: 14.06.2013
(51) Int. Cl.: H04Q 9/00, G01D 4/00

(54) **PASSERELLE DE COMMUNICATION MULTI-PROTOCOLES, NOTAMMENT POUR LA COLLECTE D'INFORMATIONS À DISTANCE**
MEHRPROTOKOLLKOMMUNIKATIONS-GATEWAY, INSBESONDERE ZUR SAMMLUNG VON ENTFERNTEN INFORMATIONEN
MULTI-PROTOCOL COMMUNICATION GATEWAY, IN PARTICULAR FOR COLLECTING REMOTE INFORMATION

(30) Priorité: 14.06.2012 FR 1255566; 22.03.2013 FR 1352568
(43) Date de publication de la demande: 22.04.2015
(73) Titulaire: Homerider Systems, 38200 Vienne (FR)
(72) Inventeur: MOULINE, Mehdi, F-33600 Pessac (FR); BERNEX, Jean-Marc, F-33113 Saint Symphorien (FR); KASTTET, Ahmed, F-33170 Gradignan (FR); FOJCIK, Pierre, F-91120 Palaiseau (FR); MAUCOURT, Joffrey, F-33610 Cestas (FR); BENMAMAR, Fath, F-33170 Gradignan (FR)
(74) Mandataire: Aquinov
(86) Numéro de dépôt international: PCT/FR2013/051390
(87) Numéro de publication internationale: WO 2013/186499

(56) Documents cités:
- WO-A2-2009/033246
- US-A1- 2009 243 869
- US-B1- 7 061 924

## Description

La présente invention concerne une passerelle de communication.

Par définition, une passerelle de communication sert à relier des réseaux différents car utilisant des bandes de fréquences différentes et/ou utilisant des protocoles de communication différents.

Dans une application visée par la présente invention, une passerelle de communication est utilisée pour relier un réseau local d'appareils de mesure équipés de moyens de communication à faible puissance et à faible portée à des systèmes centraux de traitement de l'information, les systèmes centraux étant reliés à cette passerelle par un réseau étendu.

Les appareils locaux de mesure peuvent être des dispositifs de comptage de consommation électrique, de gaz, ou d'eau équipant des habitations particulières dans une zone géographique donnée, différents logements dans une habitation collective, ou même différents secteurs d'un site industriel.

Ces appareils locaux de mesure peuvent aussi être des capteurs intelligents, permettant d'effectuer différents relevés en relation ou non avec les mesures d'un dispositif de comptage, comme par exemple des informations relatives aux conditions atmosphériques : température, pression, etc, ou des informations relatives au bruit ou à différentes pollutions.

Le document US 2009/0243869 A1 décrit une méthode et un système qui peuvent communiquer des informations fournies par des compteurs domestiques à un site distant grâce à une passerelle. La radio est entièrement programmable et configurable de manière à pouvoir émuler, transmettre et recevoir n'importe lequel d'une pluralité de protocoles RF.

Il existe aujourd'hui sur le marché un certain nombre de dispositifs de comptage et de capteurs communicants permettant un relevé d'informations à distance.

En raison de certaines réglementations, ces appareils communicants utilisent des bandes de fréquences dédiées aux installations radioélectriques de faible puissance et de faible portée. Cependant, étant donné qu'ils sont conçus par différents fabricants, ces appareils communicants sont souvent incompatibles.

L'incompatibilité de ces différents appareils provient du fait que leurs moyens de communication utilisent des bandes de fréquences différentes, parmi celles autorisées, et/ou des protocoles de communication différents.

Aussi, il est nécessaire d'utiliser différentes passerelles de communication pour pouvoir collecter les informations issues de différents appareils de mesure incompatibles et disséminés sur une zone géographique à couvrir.

Cette multiplication des passerelles de communication entraîne une multiplication des antennes de communication présentes dans une même zone géographique, tant pour recevoir les informations issues des différents appareils de mesure communicants, que pour retransmettre ces informations vers les systèmes centraux de traitement dans le cas où cette dernière liaison n'est pas filaire.

Cette augmentation du nombre des passerelles dans une même zone géographique ne va pas dans le sens d'une économie des bandes de fréquences utilisées par les appareils de mesure communicants, qui sont en outre utilisées par de nombreux autres dispositifs communicants. Aussi, l'augmentation du nombre des passerelles utilisées pour le relevé d'informations à distance contribue à augmenter les risques d'interférence et de brouillage avec les autres dispositifs communicants se situant dans la même zone géographique.

De plus, l'augmentation du nombre d'antennes qui en découle va à l'encontre des réglementations qui tendent à en limiter le nombre, notamment en milieu urbain.

Aussi, afin d'éviter ces problèmes et de n'utiliser qu'une seule passerelle de communication dans une zone géographique à couvrir, une solution actuelle est de se limiter à l'utilisation des appareils communicants issus d'un même fabricant.

C'est précisément ce qui est proposé actuellement par certains fabricants : la mise en oeuvre d'une solution complètement développée et gérée par leurs soins et englobant un réseau d'appareils de mesure communicants, une passerelle de communication et un système de traitement de l'information.

Ces solutions complètes empêchent toute concurrence et donc entraînent des surcoûts à l'achat ou à l'entretien pour les clients.

En outre, dans certains contextes, il peut être impossible d'imposer le déploiement d'une telle solution complète, notamment auprès des utilisateurs terminaux désireux de s'équiper à moindre coût ou suivant leurs propres critères.

D'autre part, le déploiement d'une solution complète n'offre généralement aucune possibilité d'adaptabilité à l'existant dans le cas où certains utilisateurs sont déjà équipés d'appareils communicants capables de transmettre les informations souhaitées mais incompatibles avec la passerelle de la solution déployée.

D'un point de vue général, les bandes de fréquences utilisables par les systèmes de collecte de données à distance comprenant un réseau d'appareils communicants et au moins une passerelle de communication sont limitées par des règlementations nationales ou internationales, comme par exemple des normes.

Ces règlementations reposent sur la bande de fréquences elle-même, mais aussi sur le cycle d'utilisation (duty cycle) par tranche horaire, la puissance des émetteurs, et le type de modulation.

Malgré les restrictions imposées par ces réglementations, les bandes de fréquences autorisées sont de plus en plus chargées, et le nombre grandissant d'appareils communicants engendre des collisions sur les bandes de fréquences partagées.

De plus, certains appareils communicants et certaines passerelles de communication ne respectent pas les normes établies et se comportent comme des perturbateurs, soit parce qu'ils ont été fabriqués sans respect des normes, soit parce qu'ils sont défectueux.

Donc, les systèmes de collecte de données à distance doivent s'accommoder de diverses perturbations, temporaires ou par bruit de fond, des bandes de fréquences autorisées.

De plus, des portées limitées en émission de certains appareils communicants ou des sensibilités limitées en réception des passerelles de communication peuvent aussi perturber la collecte de données à distance.

Toutes ces perturbations dans les bandes de fréquences autorisées donnent lieu à des diminutions du trafic de données collectées par radiofréquences et plus généralement à une baisse de qualité de la collecte de données par radiofréquences.

Par exemple, on sait qu'en présence de perturbations engendrant une élévation du plancher de bruit, le niveau de réception N des messages transmis par radiofréquences tend à monter et le taux de réception T des messages baisse.

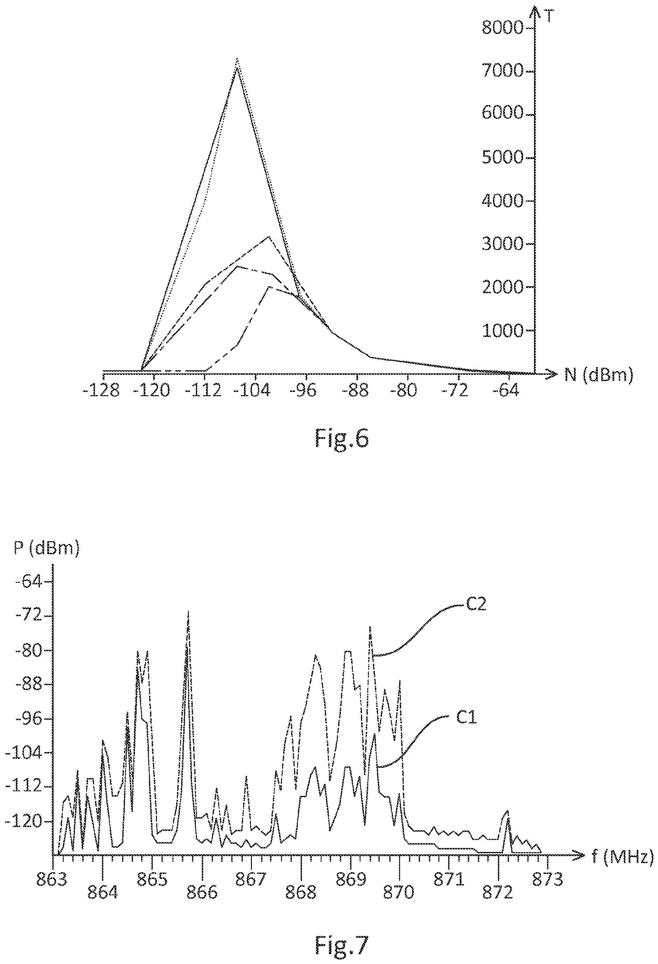

Ce phénomène est illustré par les différentes courbes (correspondant à différentes dates de relève) représentées en figure 6 et montrant qu'en l'absence de perturbations, le niveau de réception N des messages commence à -122 dBm et le taux de réception T est élevé, et qu'en présence de perturbations, le niveau de réception N remonte à -112 dBm alors que le taux de réception T est faible.

Bien entendu, les entreprises exploitant des systèmes de collecte de données à distance par radiofréquences cherchent à éviter les diminutions du trafic de données dues aux perturbations radiofréquences, ces diminutions de trafic étant nuisibles à la qualité du service rendu et dégradant la satisfaction de leurs clients.

La présente invention vise à pallier les inconvénients de l'art antérieur.

A cet effet, l'invention a pour objet une passerelle de communication, destinée à relier différents appareils de mesure communicants à un ou plusieurs systèmes de traitement de l'information pour réaliser une collecte d'informations à distance, la passerelle de communication comprenant des moyens de connexion à un réseau étendu pour communiquer avec chaque système de traitement, la passerelle étant caractérisée en ce qu'elle comprend des moyens de communication dédiés à la communication avec différents appareils de mesure sur différents réseaux à courte portée, ces moyens de communication comprenant des moyens de réception/émission et une pluralité de modules internes de communication différents, chaque module interne de communication étant capable de communiquer de manière autonome sur un réseau à courte portée spécifique et différent de celui d'un autre module interne de communication.

La présente invention couvre aussi un procédé de collecte d'informations à distance, dans lequel une passerelle de communication selon l'une des revendications précédentes est utilisée pour relier des appareils de mesure communicants à un système de traitement centralisé de l'information, la passerelle étant apte à communiquer avec des appareils de mesure hétérogènes par l'intermédiaire de réseaux à courte portée incompatibles, et avec différents systèmes de traitement par l'intermédiaire d'un réseau étendu.

Avantageusement, la présente invention propose en complément d'intégrer une fonctionnalité d'analyse spectrale à la passerelle de communication.

A cet effet, un des modules internes de communication de la passerelle est utilisé comme un module d'analyse spectrale permettant d'observer la puissance des signaux radiofréquences reçus par l'intermédiaire des moyens de réception/émission.

La fonctionnalité d'analyse spectrale ainsi intégrée à la passerelle de communication va permettre d'observer et de caractériser les perturbations des bandes de fréquences utilisées pour communiquer avec les appareils de mesure communicants, et d'envisager des solutions locales ou globales pour améliorer la qualité de la collecte de données à distance effectuée par la passerelle.

D'autres caractéristiques et avantages ressortiront de la description qui va suivre de l'invention, description donnée à titre d'exemple uniquement, en regard des dessins annexés sur lesquels :
- la figure 1 représente schématiquement une collecte de données mise en oeuvre à l'aide d'une passerelle de communication selon l'invention,
- la figure 2 représente schématiquement des communications de messages à l'aide d'une passerelle de communication selon l'invention,
- la figure 3 représente schématiquement la conception interne d'une passerelle de communication selon l'invention,
- la figure 4 représente schématiquement les moyens de mise en oeuvre d'un multiplexage d'antennes d'une passerelle de communication selon l'invention,
- la figure 5 représente schématiquement la gestion d'un multiplexage d'antennes d'une passerelle de communication selon l'invention,
- la figure 6 est un graphique illustrant les variations du niveau de réception des messages transmis par radiofréquences et du taux de réception des messages en présence de perturbations engendrant une élévation du plancher de bruit dans une bande de fréquence utilisée par les moyens de communication sur les réseaux à courte portée d'une passerelle de communication selon l'invention,
- la figure 7 est un graphique illustrant une analyse spectrale d'une bande fréquence pouvant être effectuée par le module d'analyse spectrale équipant une passerelle de communication selon l'invention,
- la figure 8 est un graphique illustrant des remontées brutales du plancher de bruit dans une bande de fréquence utilisée par les moyens de communication sur les réseaux à courte portée d'une passerelle de communication selon l'invention, et
- la figure 9 est un graphique illustrant une remontée du plancher de bruit en fonction du temps sur une longue durée dans une bande de fréquence utilisée par les moyens de communication sur les réseaux à courte portée d'une passerelle de communication selon l'invention.

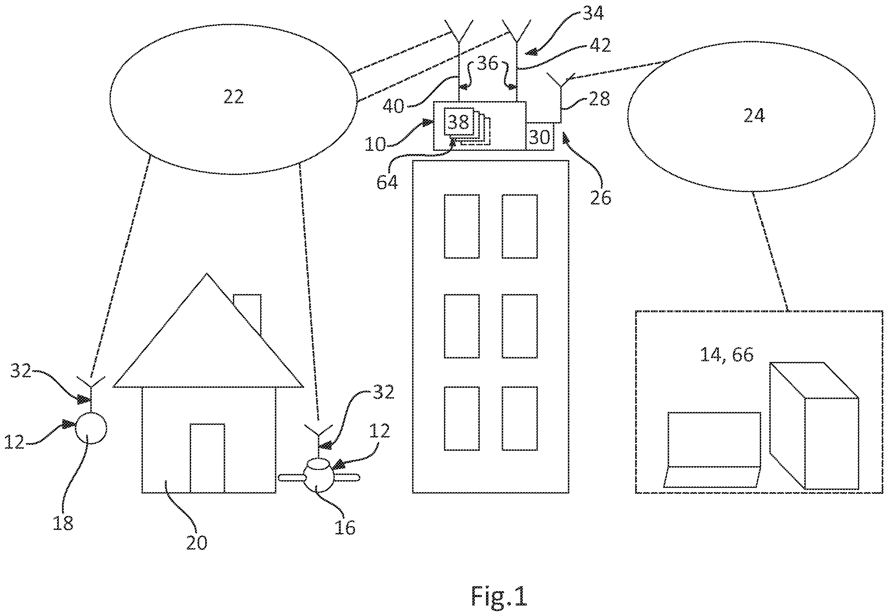

Comme illustré en figure 1, la passerelle de communication 10 selon l'invention est destinée à relier différents appareils de mesure 12 communicants à un système de traitement 14 centralisé de l'information pour réaliser une collecte d'informations à distance.

Comme précisé dans le préambule de la demande, selon l'application visée, les différents appareils de mesure 12 peuvent être des dispositifs de comptage 16 de consommation électrique, de gaz, ou d'eau équipant des habitations 20 particulières dans une zone géographique donnée, différents logements dans une habitation collective, ou même différents secteurs d'un site industriel, ou, ces différents appareils de mesure 12 peuvent aussi être des capteurs intelligents 18, permettant d'effectuer différents relevés en relation ou non avec les mesures d'un dispositif de comptage 16, comme par exemple des informations relatives aux conditions atmosphériques : température, pression, à des informations relatives au bruit ou à différentes pollutions, etc.

Dans la configuration prévue par l'invention, la passerelle 10 communique avec chaque appareil de mesure 12 par l'intermédiaire d'un réseau 22 à courte portée, et avec chaque système de traitement 14 par l'intermédiaire d'un réseau 24 étendu.

Par réseau 24 étendu, l'invention entend le réseau Internet.

De préférence, la passerelle de communication 10 comprend des moyens de connexion 26 sans fil à un tel réseau 24 étendu.

Ces moyens de connexion 26 sans fil peuvent utiliser la norme GSM, GPRS, EDGE, UMTS, HSDPA, LTE, LTE-Advanced ou autre.

Ces moyens de connexion 26 sans fil prennent la forme d'une antenne 28 extérieure et d'un module de communication 30 dédiés à la communication sur le réseau étendu 24.

Alternativement ou en complément, la passerelle de communication 10 peut comprendre des moyens de connexion 26 filaires à un réseau 24 étendu.

Grâce ses moyens de connexion 26 à un réseau 24 étendu, la passerelle peut communiquer avec différents systèmes de traitement (14-1,14-2,...).

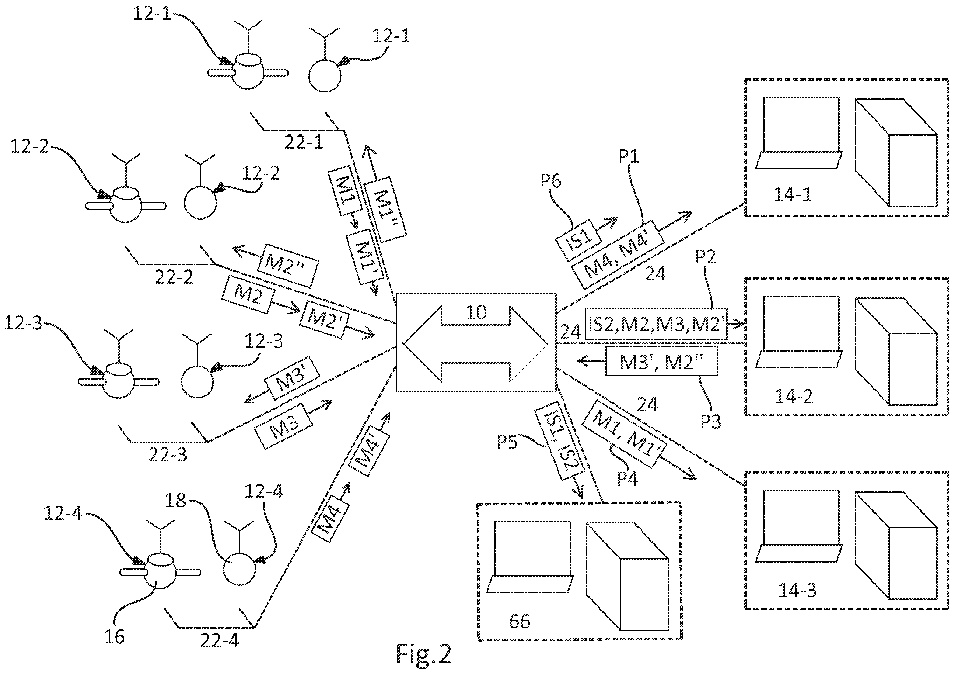

En effet, selon différentes variantes et comme illustré en figure 2, un système de traitement (14-1,14-3) peut être dédié au traitement des informations récoltées auprès des différents appareils de mesure (12-1,12-4) d'un unique réseau (22-1,22-4), ou un unique système de traitement 14-2 peut assurer le traitement des informations récoltées auprès des différents appareils de mesure (12-2,12-3) de différents réseaux (22-2,22-3).

Par réseau 22 à courte portée, l'invention entend un réseau à faible puissance fonctionnant sur les bandes de fréquences à 433MHz, à 868MHz ou à 915 MHz, ou toute autre bande de fréquences autorisée pour une application à la collecte de données dans une zone habitée ou industrielle.

Chaque appareil de mesure 12 comprend ses propres moyens de communication 32 sur un réseau 22 à courte portée, afin de transmettre les relevés effectués par ses moyens de mesure, et la passerelle 10 comprend aussi des moyens de communication 34 dédiés à la communication avec différents appareils de mesure 12 sur différents réseaux 22 à courte portée.

En effet, et comme illustré en figure 2, la passerelle 10 selon l'invention a pour objectif de permettre la collecte d'informations issues d'appareils de mesure (12-1,12-2,...) hétérogènes car communicant sur des réseaux (22-1,22-2,...) à courte portée différents et incompatibles. L'incompatibilité entre ces différents réseaux 22 à courte portée provient du fait qu'ils utilisent des bandes de fréquences différentes, parmi celles autorisées, et/ou qu'ils fonctionnent selon des protocoles de communication différents.

Afin de pouvoir communiquer avec des appareils de mesure (12-1,12-2,...) hétérogènes, les moyens de communication 34 de la passerelle 10 comprennent des moyens de réception/émission 36 et une pluralité de modules internes de communication (38-1,38-2,...) différents, chaque module interne de communication (38-1,38-2,...) étant capable de communiquer de manière autonome sur un réseau (22-1,22-2,...) à courte portée spécifique et différent de celui d'un autre module interne de communication (38-1,38-2,...).

Plus précisément, chaque module interne de communication (38-1,38-2,...) est capable de fonctionner de manière autonome sur une bande de fréquences donnée et selon un protocole spécifique.

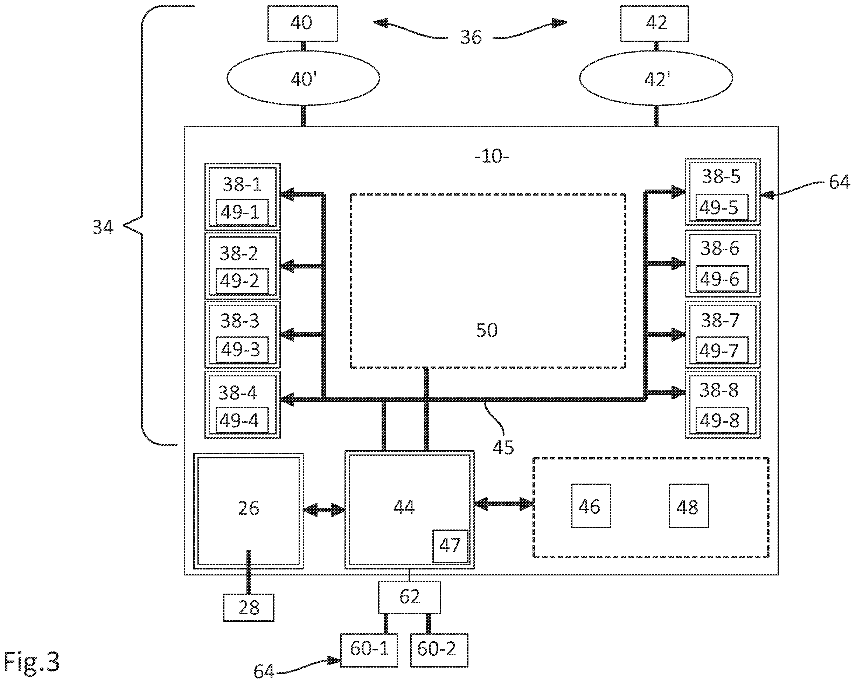

Dans un mode de réalisation préféré, correspondant sensiblement à la diversité des appareils de mesure 12 sur le marché, les moyens de communication 34 de la passerelle 10 comprennent huit modules internes de communication (38-1,38-2,38-3,38-4,38-5,38-6,38-7,38-8) différents et se partageant l'utilisation des moyens de réception/émission 36, comme l'illustre schématiquement la figure 3.

Afin de pouvoir adapter la passerelle à son environnement ou de faire évoluer ses capacités, les modules internes de communication 38 prennent la forme de cartes électroniques montées de manière amovible dans la passerelle 10 par l'intermédiaire de slots.

De préférence, les communications entre les appareils de mesure (12-1,12-2,...) et la passerelle 10, et donc ses modules internes de communication (38-1,38-2,...), sont bidirectionnelles.

Cette bidirectionnalité est utile au fonctionnement du réseau (22-1,22-2,...) à courte portée, par exemple pour sa synchronisation, sa mise à l'heure, son exploitation et sa sécurité, ou lorsqu'un actionneur est couplé à l'appareil de mesure.

Selon l'invention, des messages [(M1,M1',...),(M2,M2',...),(M3,M3',...),(M4,M4',...),...] transférés, dans un sens ou dans l'autre, entre les différents appareils de mesure (12-1,12-2,...) et la passerelle 10 vont directement de ces appareils de mesure vers la passerelle, ou indirectement via un autre appareil de mesure ou un répéteur.

Avantageusement, les communications entre la passerelle 10 et les systèmes de traitement (14-1,14-2,...) sont aussi bidirectionnelles.

Cette bidirectionnalité permet de retransmettre des instructions à la passerelle 10, d'effectuer des mises à jour, d'effectuer une prise de contrôle à distance pour sa maintenance, etc.

Couplée à une bidirectionnalité des réseaux (22-1,22-2,...) à courte portée, la bidirectionnalité entre la passerelle 10 et les systèmes de traitement (14-1,14-2,...) permet de transférer, dans un sens ou dans l'autre, des messages [(M1,M1',...),(M2,M2',...),(M3,M3',...),(M4,M4',...),...] entre un ou plusieurs appareils de mesure (12-1,12-2,...) prédéterminés et un ou plusieurs systèmes de traitement (14-1,14-2,...) prédéterminés.

La passerelle 10 selon l'invention comprend des moyens de traitement 44, à savoir un processeur principal, assurant la gestion du fonctionnement de ses différents composants, dont celui des moyens de connexion 26 à un réseau étendu 24 pour la communication avec les systèmes de traitement (14-1,14-2,...), et celui des moyens de communication 34 pour la communication avec les appareils de mesure (12-1,12-2,...).

Ces moyens de traitement 44 gèrent aussi le fonctionnement d'autres composants 46 nécessaires au fonctionnement de la passerelle 10, à savoir : une mémoire vive, une mémoire morte, une horloge, des ports de communication, différents canaux de communication, une alimentation électrique, des DEL, divers boutons, ainsi que d'autres composants 48 moins indispensables tels des capteurs atmosphériques ou autre.

Selon l'invention, les moyens de traitement 44 communiquent avec les modules internes de communication (38-1,38-2,...) par l'utilisation d'un unique canal de communication 45, de préférence un bus série synchrone multiplexé à haut débit, avec adressage.

Ainsi, tous les modules de communication (38-1,38-2,...) ont accès au même canal de communication 45 pour transférer les messages vers les systèmes de traitement (14-1,14-2,...).

Dans cette communication, les moyens de traitement sont l'entité maîtresse, les modules de communication (38-1,38-2,...) étant esclaves.

Plus en détails, les messages [(M1,M1',...),(M2,M2',...),(M3,M3',...),(M4,M4',...),...] provenant des modules internes de communication (38-1,38-2,...) sont multiplexés sur le canal de communication 45 afin d'être stockés dans une mémoire 47 des moyens de traitement 44 de la passerelle 10 avant d'être retransmis vers le système de traitement (14-1,14-2,...) de destination. Eventuellement, en cas d'indisponibilité des moyens de traitement 44, les modules internes de communication (38-1,38-2,...) disposent d'une mémoire tampon (49-1,49-2,...) leur permettant de stocker un minimum de messages [(M1,M1',...),(M2,M2',...),(M3,M3',...),(M4,M4',...),...] pour éviter de perdre des données. Une fois disponible, les moyens de traitement 44 vont recevoir les messages en attente jusqu'à vider la mémoire tampon (49-1,49-2,...) de chacun des modules internes de communication (38-1,38-2,...).

Ensuite, l'invention prévoit que les communications entre la passerelle 10 et les systèmes de traitement (14-1,14-2,...) sont effectuées par paquets.

Ainsi, des messages [(M1,M1',...),(M2,M2',...),(M3,M3',...),(M4,M4',...),...] transmis par différents appareils de mesure (12-1,12-2,...) et appartenant à une même famille, c'est-à-dire étant destinés à un même système de traitement (14-1,14-2,...), sont stockés, encapsulés, puis concaténés en paquets (P1,P2,...) par la passerelle 10.

Avantageusement, les paquets (P1,P2,...) ainsi créés peuvent être compressés et cryptés par la passerelle 10 avant leur transmission vers un système de traitement (14-1,14-2,...) prédéterminé. De plus, des messages [(M1,M1',...),(M2,M2',...),(M3,M3',...),(M4,M4',...),...] émis par un système de traitement (14-1,14-2,...) à destination d'un ou plusieurs appareils de mesure (12-1,12-2,...) peuvent être encapsulés, puis concaténés en paquets (P1,P2,...), et éventuellement compressés et cryptés, avant leur transmission à la passerelle 10.

Afin de limiter le nombre d'antennes de la passerelle 10, les moyens de réception/émission 36 prennent la forme de deux antennes (40,42), de préférence extérieures, dont l'utilisation en réception, et éventuellement aussi en émission, est partagée entre les modules internes de communication (38-1,38-2,...).

Cette limitation du nombre d'antennes et leur utilisation partagée sont rendues possibles dans l'application visée car les appareils de mesure transmettent (12-1,12-2,...) des messages à occurrence réduite.

Selon l'invention, l'utilisation des antennes (40,42) est partagée grâce à un procédé de partage utilisant le multiplexage et définissant la méthode de partage des ressources antennes.

A cet effet, les moyens de communication 34 de la passerelle 10 comprennent un module de gestion 50 du fonctionnement, et notamment du multiplexage, des antennes (40,42).

Les moyens de traitement 44 supervisent le fonctionnement du module de gestion 50 du fonctionnement des antennes (40,42).

Chaque antenne (40,42) des moyens de réception/émission 36 est amplifiée en réception, comme en émission, grâce à des amplificateurs (40',42') disposés en pied de ces antennes (40,42).

Cette amplification en pied permet de diminuer la consommation électrique des modules internes de communication (38-1,38-2,...), de compenser les pertes dans les différentes liaisons électriques, et notamment celles dues au multiplexage, et d'assurer une meilleure qualité de signal.

Le fonctionnement de ces amplificateurs (40',42') est aussi géré par le module de gestion 50 du fonctionnement des antennes (40,42).

Ainsi, la commutation entre le fonctionnement en émission ou en réception, ou l'arrêt, des antennes (40,42) est effectuée directement par l'alimentation des amplificateurs (40',42') gérée par le module de gestion 50.

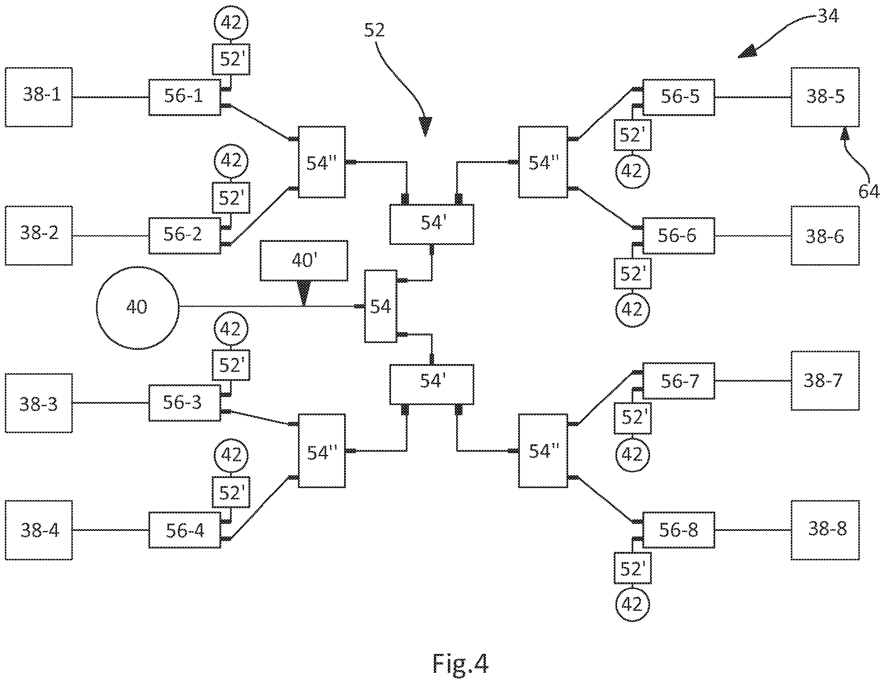

Comme l'illustre la figure 4 pour une seule antenne 40, et en vue de réaliser le multiplexage des antennes, chaque antenne (40,42) est reliée à tous les modules internes de communication (38-1,38-2,...) par un réseau (52,52') de diviseurs/combineurs (54,54',...) de puissance.

Bien entendu, chaque amplificateur (40',42') est intercalé entre l'antenne (40,42) et le réseau (52,52') de diviseurs/combineurs 54 correspondants.

Dans le mode de réalisation préféré dans lequel les moyens de communication 34 de la passerelle 10 comprennent huit modules internes de communication (38-1,38-2,...), pour chaque antenne (40,42), et en allant d'une antenne (40,42) jusqu'aux modules (38-1,38-2,...), le réseau (52,52') comprend un premier diviseur/combineur 54 relié à deux diviseurs/combineurs 54' chacun reliés à deux diviseurs/combineurs 54", les quatre derniers diviseurs/combineurs 54" étant chacun reliés à deux modules internes de communication (38-1,38-2,...).

Afin de sélectionner l'utilisation d'une des deux antennes (40,42), un commutateur (56-1,56-2,...) est intercalé entre chaque module interne de communication (38-1,38-2,...) et les deux réseaux (52,52') de diviseurs/combineurs (54,54',...) auxquels il est relié.

Le fonctionnement des commutateurs (56-1,56-2,...) est aussi commandé par le module de gestion 50 afin d'opérer la sélection d'antennes (40,42) définie par le procédé de partage d'antennes selon l'invention.

Selon l'invention, le partage d'antennes est contrôlé par le module de gestion 50 qui assure la fonction logique de multiplexage sur les deux antennes (40,42).

Ce module de gestion 50 peut prendre la forme d'un circuit à logique programmable ou d'un processeur dédié, le choix de la technologie dépendant du temps de commutation requis pour l'application visée et du nombre de modules de communication (38-1,38-2,...) à gérer.

Dans le procédé de partage d'antennes selon l'invention, chaque module interne de communication (38-1,38-2,...) demande au module de gestion 50 à émettre ou à recevoir sur la première antenne 40 ou sur la seconde antenne 42 par l'intermédiaire de signaux logiques.

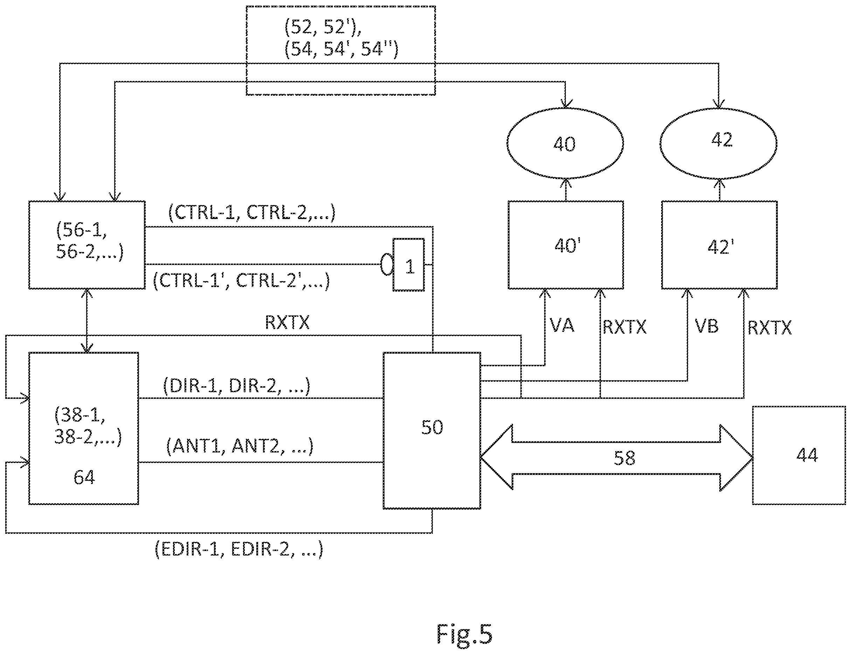

Comme illustré en figure 5, chaque module de communication (38-1,38-2,...) dispose de deux signaux de requête : un signal d'antenne (ANT-1,ANT-2,...) correspondant au choix d'antenne, et un signal de direction (DIR-1,DIR-2,...) correspondant au sens émission ou réception selon que le module veut émettre ou recevoir.

Le module de gestion 50 reçoit en entrée les signaux de requête (ANT-1,ANT-2,...) et (DIR-1,DIR-2,...) provenant des modules de communication (38-1,38-2,...) et décide en fonction de règles préétablies quel module de communication (38-1,38-2,...) est autorisé à être relié à quelle antenne (40,42).

Selon une première règle du procédé de partage selon l'invention, le module de gestion 50 autorise l'émission de données à un seul module de communication (38-1,38-2,...) à la fois.

Cette autorisation d'émission est transmise au module (38-1,38-2,...) sélectionné par l'intermédiaire d'un signal d'autorisation (EDIR-1,EDIR-2,...).

Selon une deuxième règle du procédé de partage, le premier module de communication (38-1,38-2,...) qui demande l'accès en émission bloque la demande des autres modules (38-1,38-2,...) qui doivent attendre la fin de l'émission en cours.

A cet effet, lorsqu'un module de communication (38-1,38-2,...) émet, le module de gestion 50 transmet un signal de pilotage RXTX à tous les autres modules (38-1,38-2,...) leur indiquant qu'une émission est en cours et que toute action sur l'antenne (40,42) utilisée en émission est suspendue.

Aussi, lorsqu'un module de communication (38-1,38-2,...) émet par une première antenne (40,42), le module de gestion 50 route les autres modules de communication (38-1,38-2,...), notamment en réception, vers la deuxième antenne (40,42).

Dans le cas où plusieurs modules de communication (38-1,38-2,...) demandent à émettre, une loi de priorité est appliquée.

Selon cette loi de priorité, équivalente à un encodage prioritaire logique, lorsqu'au moins un signal de direction (DIR-1,DIR-2,...) est activé, le module de gestion 50 contrôle les signaux (DIR-1,DIR-2,...) du premier au dernier, et donne la priorité au module de communication (38-1,38-2,...) correspondant dans cet ordre.

Aussi, une fois l'émission autorisée à un module (38-1,38-2,...) sur une antenne, celui-ci la conserve jusqu'à la fin de la transmission, et les requêtes d'émission des autres modules sur cette antenne demeurent bloquées jusqu'à la fin de la transmission.

Le module de communication (38-1,38-2,...) le plus prioritaire est seul autorisé par le module de gestion 50 à émettre.

Cependant, vu le temps de réaction des composants électroniques de la passerelle 10 et la faible occurrence des messages transitant sur les réseaux de courte portée dans l'application visée, la loi de priorité ne s'applique que dans les cas exceptionnels de simultanéité de requête.

De façon plus générale, et selon une troisième règle du procédé de partage, lorsqu'un module de communication (38-1,38-2,...) est informé qu'une émission est en cours, il ne demande pas à émettre en même temps. Cela permet d'éviter que le module de gestion 50 traite des requêtes inutilement.

Selon une quatrième règle du procédé de partage selon l'invention, lorsque tous les modules de communication (38-1,38-2,...) sont en réception, ce qui est le cas général, chaque module de communication (38-1,38-2,...) est relié par le module de gestion 50 à l'antenne (40,42) de son choix.

Ainsi, les modules de communication (38-1,38-2,...) peuvent librement passer d'une antenne (40,42) à l'autre pour augmenter les chances de réception de messages.

Dans le même objectif, il peut être prévu d'équiper la passerelle 10 selon l'invention avec des antennes (40,42) offrant des caractéristiques différentes ou orientées de manière différente. Selon une cinquième règle du procédé de partage selon l'invention, il est prévu de compter le temps cumulé d'émission de chaque module de communication (38-1,38-2,...).

Le temps d'émission de chaque module de communication (38-1,38-2,...) est contrôlé afin d'obtenir un partage équitable des antennes (40,42) et pour éviter tout risque de blocage en émission. Aussi, un module de communication (38-1,38-2,...) peut être interdit d'émission, si :
- il ne termine pas l'émission de son message à la fin d'un délai fixé comme paramètre dans le module de gestion 50,
- il dépasse un temps maximal d'utilisation des antennes (40,42) en émission par tranche horaire, ou
- de manière plus générale, si le module ne respecte pas des critères prédéfinis d'utilisation des antennes en émission, comme par exemple un taux de transmission prédéfini par une norme, telle la recommandation REC7003 « Duty Cycle Catégories », sur une bande de fréquences pendant une tranche horaire d'une heure.

Bien entendu, si sa requête en émission est annulée, après un certain temps d'attente, ou une fois que le module interne de communication interdit d'émission respecte de nouveaux les critères, il peut de nouveau être autorisé à émettre.

Afin de relier chaque module de communication (38-1,38-2,...) vers l'antenne (40,42) choisie à partir des règles précédentes, le module de gestion 50 pilote le fonctionnement des commutateurs (56-1,56-2,...) et des amplificateurs d'antenne (40',42').

Le module de gestion 50 pilote les commutateurs (56-1,56-2,...) à l'aide d'un signal de contrôle (CTRL-1,CTRL-2,...) et d'un signal de contrôle inverse (CTRL-1',CTRL-2',...).

De plus, le module de gestion 50 pilote le mode de fonctionnement : émission, réception ou arrêt des amplificateurs (40',42') par leur alimentation, les amplificateurs (40',42') recevant différents potentiels d'alimentation (V1,V2,V3) qui les mettent hors service (V1, par exemple 0V), en réception (V2, par exemple 3V) ou en émission (V3, par exemple 5V).

A cet effet, le module de gestion 50 utilise trois signaux commandant le fonctionnement des alimentations des amplificateurs (40',42') : des premiers signaux d'alimentation VA et VB servant respectivement à mettre en service ou hors service l'alimentation de l'amplificateur 40' de l'antenne 40 et l'amplificateur 42' de l'antenne 42, et le signal de contrôle RXTX servant à piloter le potentiel d'alimentation (V1,V2,V3) de chaque amplificateur (40',42').

En plus de contrôler le partage correct des antennes (40,42), le module de gestion 50 reporte vers les moyens de traitement 44 de la passerelle 10 les informations sur le fonctionnement du multiplexage. Ainsi, les moyens de traitement 44 peuvent savoir quel est le module de communication (38-1,38-2,...) en émission et prévenir tout cas de dysfonctionnement.

Par un canal synchrone 58, les moyens de traitement 44 peuvent communiquer avec le module de gestion 50 et connaître son état, lancer des tests, recharger le logiciel du module de gestion 50 ou envoyer des informations relatives aux limites d'usage en émission.

En plus des modules internes de communication (38-1,38-2,...), la passerelle 10 peut comprendre des modules externes (60-1,60-2,...) de communication pour étendre ses capacités de communication sur les réseaux (22-1,22-2,...) à courte portée.

Ces modules externes (60-1,60-2,...) de communication sont connectés à la passerelle 10 par l'intermédiaire de ports externes 62, notamment de type USB. L'utilisation de ces modules externes (60-1,60-2,...) de communication pour la transmission de messages est gérée par les moyens de traitement 44.

En complément, la passerelle de communication 10 peut aussi intégrer une fonctionnalité d'analyse spectrale afin d'observer les bandes de fréquences utilisées pour communiquer avec les appareils de mesure communicants, les objectifs de cette observation étant de caractériser les perturbations de ces bandes de fréquences, et d'appliquer des solutions locales ou globales pour améliorer la qualité de la collecte de données à distance.

Pour l'intégration de cette fonctionnalité d'analyse spectrale, un des modules internes de communication (38-1,38-2,...) est utilisé comme un module d'analyse spectrale 64 permettant d'observer la puissance des signaux radiofréquences reçus par l'intermédiaire des moyens de réception/émission 36 de la passerelle 10, comme l'illustrent les figures 1, 3 et 4.

Afin d'être utilisé comme un module d'analyse spectrale 64, le module interne de communication (38-1,38-2,...) choisi est mis en service grâce à un paramétrage spécifique adaptant son fonctionnement à la mise en oeuvre de cette fonction d'analyse spectrale.

Selon l'invention, le module d'analyse spectrale 64 et les autres modules internes de communication (38-1,38-2,...) se partagent l'utilisation des moyens de réception/émission 36 formés par les deux antennes (40,42).

Dans le cas où la passerelle 10 comprend aussi des modules externes (60-1,60-2,...) de communication pour étendre ses capacités de communication sur les réseaux (22-1,22-2,...) à courte portée, le module d'analyse spectrale 64 et ces modules externes (60-1,60-2,...) de communication se partagent aussi l'utilisation des moyens de réception/émission 36 formés par les deux antennes (40,42).

Eventuellement, un des modules externes (60-1,60-2,...) de communication est utilisé en tant que module d'analyse spectrale (64) en lieu et place d'un module interne (38-1,38-2,...) de communication, comme l'illustre la figure 3.

Comme il prend la forme de l'un des modules internes (38-1,38-2,...) ou externes (60-1,60-2,...) de communication, le module d'analyse spectrale 64 exploite les mêmes signaux radiofréquences que les autres modules.

En effet, le module d'analyse spectrale 64 est relié aux antennes (40,42) par les mêmes réseaux (52,52') de diviseurs/combineurs (54,54',...) de puissance que les autres modules de communication.

De plus, le fonctionnement du module d'analyse spectrale 64 est supervisé par les mêmes moyens de traitement 44 qui gèrent le fonctionnement des autres composants de la passerelle 10 dont les autres modules de communication.

Et, le partage des ressources antennes (40,42) par multiplexage entre le module d'analyse spectrale 64 et les autres modules de communication est aussi contrôlé par le module de gestion 50 des moyens de communication 34.

Par conséquent, le module d'analyse spectrale 64 suit les mêmes règles de partage des ressources antennes que les autres modules de communication, à la seule différence que le module d'analyse spectrale 64 ne fonctionne qu'en réception et ne nécessite pas d'accès aux antennes (40,42) en émission comme les autres modules de communication.

De plus, le module d'analyse spectrale 64 est programmé pour fonctionner sur une antenne (40,42) pour chaque cycle de mesure, le choix d'antenne étant modifiable par commande : soit l'une, soit l'autre, soit les deux à l'alternat.

Avantageusement, lors de chaque cycle de mesure effectué par le module d'analyse spectrale 64, une information identifiant l'antenne (40,42) utilisée est associée aux mesures effectuées.

Au lieu de collecter les messages [(M1,M1',...),(M2,M2',...),(M3,M3',...),(M4,M4',...),...] transmis par les différents appareils de mesure (12-1,12-2,...) comme les autres modules de communication de la passerelle 10, le module d'analyse spectrale 64 réalise des mesures de puissance des signaux radiofréquences captés par l'une des antennes (40,42).

Plus en détails, le module d'analyse spectrale 64 mesure la puissance des signaux radiofréquences captés par l'une des antennes (40,42) dans chaque bande de fréquences (B1,B2,...) utilisée par les différents modules de communications internes (38-1,38-2,...) et externes (60-1,60-2,...) des moyens de communication 34 de la passerelle.

Avantageusement, le module d'analyse spectrale 64 mesure tous les signaux radiofréquences présents dans les bandes de fréquences utilisées par les différents modules internes (38-1,38-2,...) et externes (60-1,60-2,...).

Dans un mode opératoire préféré, le module d'analyse spectrale 64 réalise les mesures de puissance des signaux radiofréquences en balayant chaque bande de fréquences (BF1,BF2,...) par pas de fréquence, par exemple par pas de 0,1 MHz.

Le graphique en figure 7 illustre une analyse spectrale pouvant être effectuée par le module d'analyse spectrale 64 dans une bande de fréquences (BF1,BF2,...) s'étendant entre 863 MHz et 873 MHz et par pas de 0,1 MHz.

Les mesures de puissance cumulées par le module d'analyse spectrale 64 pendant une minute sont affichées sous la forme de deux courbes (C1,C2) indiquant la puissance P des signaux radiofréquences, en décibels (dBm) et respectivement en valeur moyenne et en valeur maximale, pour chaque pas de fréquence f de 0,1 MHz.

Avantageusement, l'écart entre la courbe moyenne C1 et la courbe maximum C2 fournit des informations statistiques sur la durée des perturbations : un écart faible signifiant une perturbation longue, et un écart important étant caractéristique d'une perturbation courte. Selon l'invention, le balayage fréquentiel de mesure est répété par le module d'analyse spectrale 64 pour chaque bande de fréquences utilisée par les moyens de communication 34 selon un intervalle de temps plus court que la durée de transmission des messages [(M1,M1',...),(M2,M2',...),(M3,M3',...),(M4,M4',...),...] échangés entre les appareils de mesure 12 et les moyens de communication 34 de la passerelle 10.

Comme par exemple par le biais des courbes moyenne C1 et maximum C2, par le biais des mesures de puissance des signaux radiofréquences qu'il effectue, le module d'analyse spectrale 64 permet à la passerelle 10 de récolter des informations statistiques (IS1,IS2,...) sur l'utilisation de chaque bande de fréquences (BF1,BF2,...) utilisée par les moyens de communication 34.

Par informations statistiques (IS1,IS2,..), l'invention entend les résultats bruts ou pré-analysés des mesures de puissance effectuées par le module 64 d'analyse spectrale dans les différentes bandes de fréquences (BF1,BF2,...).

Avantageusement, les informations statistiques (IS1,IS2,...) contiennent aussi l'identification de l'antenne (40,42) utilisée pour chaque cycle de mesure de puissance effectué par le module d'analyse spectrale 64.

Ces informations statistiques (IS1,IS2,...) sur l'utilisation de chaque bande de fréquences (BF1,BF2,...) sont mémorisées par la passerelle 10 avant d'être exploitées localement par la passerelle 10 et ses moyens de traitement 44, ou avant d'être transmises vers un système distant, tel un système de traitement (14-1,14-2,...), qui les exploitera.

Comme les messages [(M1,M1',...),(M2,M2',...),(M3,M3',...),(M4,M4',...),...], ces informations statistiques (IS1,IS2,..) peuvent être stockées dans une mémoire 47 des moyens de traitement 44 de la passerelle 10 avant d'être exploitées par ces moyens de traitement 44, ou avant d'être retransmises vers le système distant, tel un système de traitement (14-1,14-2,...), qui les exploitera.

Avantageusement, le module interne (38-1,38-2,...) ou externe (60-1,60-2,...) de communication utilisé comme module d'analyse spectrale 64 dispose d'une mémoire tampon (49-1,49-2,...) lui permettant de stocker un minimum d'informations statistiques (IS1,IS2,...), par exemple en vue d'attendre la disponibilité des moyens de traitement 44 ou la retransmission des informations statistiques (IS1,IS2,..) vers un système distant.

Chaque information statistique (IS1,IS2,...) peut être transmise pour exploitation au système de traitement (14-1,14-2,...) en relation avec le ou les module(s) interne(s) (38-1,38-2,...) ou externe(s) (60-1,60-2,...) de communication travaillant sur la bande de fréquence (BF1,BF2,...) concernée.

Alternativement ou en complément, et comme illustré en figure 2, une information statistique (IS1,IS2,..) relative à une bande de fréquence (BF1,BF2,...) peut être retransmise à un système de supervision 66 utilisé pour superviser à distance les communications entre la passerelle 10 et les différents appareils de mesure 12 via le réseau 22 à courte portée concerné.

En vue de leur transmission vers un système de traitement (14-1,14-2,...) ou vers un système de supervision 66 d'un réseau 22 à courte portée, les informations statistiques (IS1,IS2,...) relatives à chaque bande de fréquence (BF1,BF2,...) peuvent être stockées, encapsulées, puis concaténées en paquets (P1,P2,...) individuellement, à plusieurs, ou avec les messages [(M1,M1',...),(M2,M2',...),(M3,M3',...),(M4,M4',...),...] récoltés par les autres modules de communication.

Dans un mode opératoire préféré, les informations statistiques (IS1,IS2,...) relatives à chaque bande de fréquence (BF1,BF2,...) sont transmises vers un centre de traitement ou vers un système de supervision 66 à intervalles réguliers, par exemple toutes les minutes.

Localement par la passerelle 10 ou à distance par un système de traitement (14-1,14-2,...) ou un système de supervision 66, l'exploitation des informations statistiques (IS1,IS2,...) récoltées par le module d'analyse spectrale 64 permet d'identifier des perturbations comme une remontée du bruit ambiant, permanente ou temporaire, dans une des bandes de fréquences (BF1,BF2,...) utilisées par les moyens de communication 34 de la passerelle 10, et/ou comme une surcharge d'utilisation d'une de ces bandes de fréquences (BF1,BF2,...) utilisées par les moyens de communication 34.

En cas d'identification d'une remontée du bruit ambiant et/ou d'une surcharge dans les bandes de fréquences (BF1,BF2,...) utilisées par les moyens de communication 34 de la passerelle 10, des actions correctives sur l'utilisation des bandes de fréquences (BF1,BF2,...) par les moyens de communication 34 sont lancées pour s'affranchir de la ou des perturbation(s) détectée(s), et pour rétablir la qualité de la collecte de données réalisée sur les réseaux 22 à courte portée.

Les actions correctives sur l'utilisation des bandes de fréquences (BF1,BF2,...) sont lancées par la passerelle 10 ou depuis un centre de système de traitement (14-1,14-2,...) ou un système de supervision 66.

Le délai de réponse entre la détection d'une remontée du bruit ambiant et/ou d'une surcharge et le lancement d'une action corrective est fonction du service rendu.

Par exemple, dans le cas du télé-relevé de compteurs de consommation, le délai de réponse sera inférieur à la semaine.

Dans d'autres cas, ce délai de réponse pourra être inférieur, la célérité de l'intervention, et par exemple de prise de décision d'un système de supervision 66, dépendant de l'urgence de l'information récoltée et de la fréquence de ces relevés d'information.

Généralement, si le délai de réponse attendu est court, la passerelle 10 sera programmée pour lancer l'action corrective, et si le délai de réponse attendu est plus long, l'action corrective sera lancée depuis un système de traitement (14-1,14-2,...) ou un système de supervision 66.

De préférence, le système de supervision 66 connaissant la structure du réseau étendu 24 le reliant à la passerelle 10 et celle des différents réseaux 22 à courte portée, ce système de supervision 66 exploite les résultats de l'analyse spectrale pour prendre les décisions relatives aux actions correctives à lancer.

Selon un premier exemple, dans le cas d'une zone géographique couverte par différentes passerelles de communication 10, le système de supervision 66 peut envisager, de manière définitive ou temporaire, un routage des informations statistiques (IS1,IS2,...) vers une autre passerelle de communication 10 qu'une passerelle 10 se situant dans une zone chargée, cela afin d'éviter de perdre des informations.

Selon un autre exemple, le système de supervision 66 peut décider d'une reprogrammation de différents appareils de mesure 12 communicants, la reprogrammation étant retransmise vers les appareils 12 concernés via la passerelle de communication 10.

Cependant, dans tous les cas, l'exploitant d'un réseau 22 à courte portée cherche à détecter le problème avant de provoquer un impact sur la collecte de données.

Une remontée temporaire du bruit ambiant est généralement due à un perturbateur intentionnel ou occasionnel dans la bande de fréquence (BF1,BF2,...) considérée.

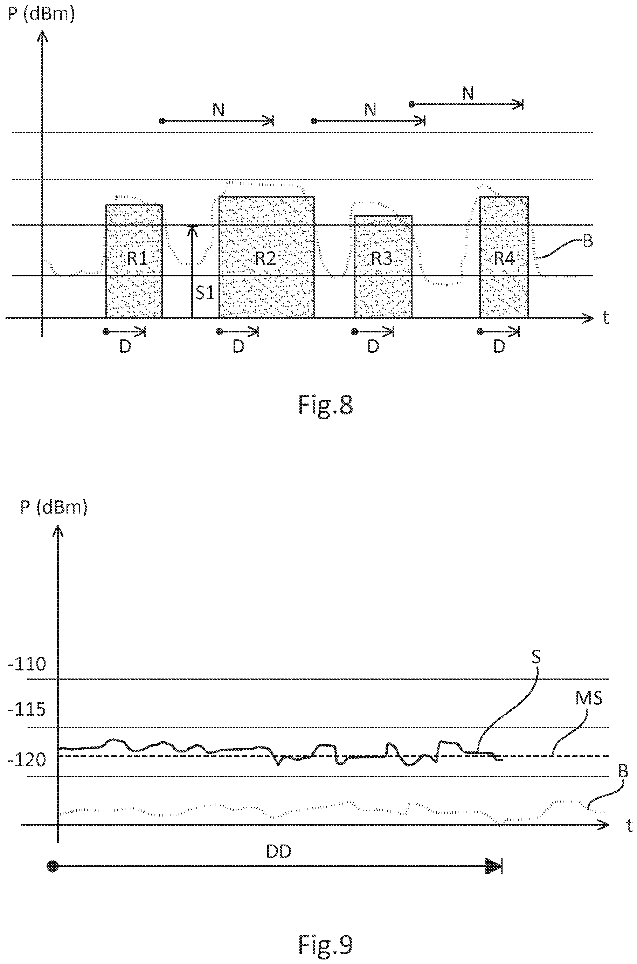

Comme illustré par la figure 8, dans une bande de fréquences (BF1,BF2,...) considérée, un perturbateur intentionnel ou occasionnel entraîne des remontées brutales (R1,R2,R3,R4,...) du plancher de bruit B, mesuré par le module d'analyse spectrale 64, qui se répètent au cours du temps t.

Aussi, afin d'identifier la présence d'un ou plusieurs perturbateur(s) dans la bande de fréquence (BF1,BF2,...) considérée, les informations statistiques (IS1,IS2,...) récoltées par le module d'analyse spectrale 64 sont utilisées pour compter le nombre de remontées brutales (R1,R2,R3,R4,...) de signal supérieures à un seuil 51 prédéterminé, se prolongeant pendant une durée supérieure à un délai de détection D, et se reproduisant après un délai inférieur à un délai de non détection N.

Lorsque le comptage de ces remontées brutales (R1,R2,R3,R4,...) de signal dans la bande de fréquences (BF1,BF2,...) considérée a permis d'identifier un perturbateur, un signal d'alerte est créé.

Selon le mode opératoire choisi, le signal d'alerte relatif à l'identification d'un perturbateur dans une bande de fréquences (BF1,BF2,...) déterminée est directement traité par la passerelle 10 ou retransmis vers un système de traitement (14-1,14-2,...) ou un système de supervision 66.

A titre d'exemple, dans le cas d'un émetteur identifié comme parasite dans la zone de réception de la passerelle 10, un émetteur étant considéré comme parasite dès qu'il relève le seuil de réception de la passerelle 10 et qu'il ne respecte pas le cycle d'utilisation (duty cycle) par tranche horaire et la puissance d'émission autorisée dans une des bandes de fréquences (BF1,BF2,...), une action corrective est de traquer l'émetteur parasite pour arrêter son émission.

Le plus souvent, l'élimination de l'émetteur parasite de la zone de réception de la passerelle 10 est obtenue par une suppression physique de cet émetteur.

Du point de vue de la passerelle 10, une surcharge d'utilisation d'une des bandes de fréquences (BF1,BF2,...) utilisées par les moyens de communication 34 correspond à un niveau de plancher de bruit se situant au-dessus de la sensibilité radiofréquences du module de communication de la passerelle 10 travaillant dans la bande de fréquences (BF1,BF2,...) considérée, ou à une activité importante due à un trafic de données important dans la bande de fréquences (BF1,BF2,...) considérée.

Comme illustré par la figure 9 représentant dans le temps le niveau moyen de signal 5 détecté et la moyenne MS de ce signal par rapport au plancher de bruit B, un plancher de bruit B trop élevé ou une activité trop importante dans la bande de fréquences (BF1,BF2,...) considérée, se traduisent par une remontée du plancher de bruit B sur une longue durée et dans une sensibilité radiofréquence propre à gêner la réception de messages [(M1,M1',...),(M2,M2',...),(M3,M3',...),(M4,M4',...),...] par les moyens de communication 34.

Afin d'identifier un plancher de bruit trop élevé ou une activité trop importante dans la bande de fréquence (BF1,BF2,...) considérée, les informations statistiques (IS1,IS2,...) récoltées par le module d'analyse spectrale 64 sont utilisées pour analyser le plancher de bruit B mesuré par le module d'analyse spectrale 64 à l'aide d'une moyenne glissante réalisée sur une durée de détection DD suffisamment longue dans le temps t pour la réalisation d'une analyse significative, et par exemple supérieure à deux heures.

En effet, l'émission de données par les appareils de mesure 12 communicants est généralement également répartie sur vingt-quatre heures, et la perte de trafic due au bruit ambiant généré par certains émetteurs parasites n'est décelable que par une observation sur vingt-quatre heures.

Cependant, certains émetteurs parasites n'entrainent une baisse de trafic de 20 à 50% du trafic nominal que pendant une ou deux heures au plus, sachant qu'une baisse du trafic nominal de 50% pendant une heure représente environ 2% de perte générale si la période de relève de l'information est de 24 heures.

Bien entendu, de telles baisses de trafic temporaires peuvent être compensées par une redondance des messages transmis par les appareils de mesure 12 communicants, mais uniquement dans une certaine limite, variable selon le cas, afin d'éviter de créer de nouvelles perturbations.

La distinction entre un plancher de bruit trop élevé ou une activité trop importante dans la bande de fréquence (BF1,BF2,...) considérée est effectuée en corrélant le taux de réception T des messages [(M1,M1',...),(M2,M2',...),(M3,M3',...),(M4,M4',...),...] échangés entre les moyens de communication 34 de la passerelle 10 et les appareils de mesure 12 avec le plancher de bruit B mesuré par le module d'analyse spectrale 64 dans la bande de fréquences (BF1,BF2,...) considérée. Si le taux de réception T est faible, la perturbation est imputable au trafic d'autres émetteurs : c'est une saturation externe.

Si le taux de réception T est élevé, la perturbation est imputable au trafic sur la bande fréquence (BF1,BF2,...) considérée elle-même, et donc sur le réseau 22 à courte portée correspondant : c'est une auto-saturation liée au nombre de collisions entre les messages [(M1,M1',...),(M2,M2',...),(M3,M3',...),(M4,M4',...),...] échangés entre les moyens de communication 34 de la passerelle 10 et les appareils de mesure 12.

A titre d'exemple, dans le cas d'une saturation externe, une remontée de 6 dB du plancher de bruit B est équivalente à une perte de 50 à 75% des données transmises par les messages [(M1,M1',...),(M2,M2',...),(M3,M3',...),(M4,M4',...),...] échangés entre les moyens de communication 34 de la passerelle 10 et les appareils de mesure 12.

Dans le cas d'une auto-saturation d'une bande de fréquences, une action corrective pour parer à de telles perturbations longue durée peut consister à limiter la sensibilité des moyens de réception des modules de communication de la passerelle 10, et par conséquent son rayon d'action.

Alternativement, une autre action corrective pour parer à de telles perturbations longue durée peut consister à réduire la puissance des moyens d'émission des modules de communication de la passerelle 10 et des appareils de mesure 12.

Ou, une autre action corrective peut consister à reprogrammer le fonctionnement des moyens d'émission des modules de communication de la passerelle 10 et des appareils de mesure 12 sur d'autres canaux de fréquences, soit sur d'autres bandes de fréquences.

Dans tous les cas, et bien que l'une ou l'autre de ces actions correctives ait été lancée, le nombre de passerelles 10 doit être adapté à la population d'appareils de mesure 12 dans la zone à couvrir. Lorsque l'analyse par moyenne glissante du plancher de bruit B mesuré par le module d'analyse spectrale 64 dans la bande de fréquences (BF1,BF2,...) considérée a permis d'identifier un plancher de bruit trop élevé ou une activité trop importante dans la bande de fréquence (BF1,BF2,...) considérée, un signal d'alerte est créé.

Selon le mode opératoire choisi, le signal d'alerte relatif à l'identification d'un plancher de bruit trop élevé ou d'une activité trop importante dans la bande de fréquence (BF1,BF2,...) considérée est directement traité par la passerelle 10 ou retransmis vers un système de traitement (14-1,14-2,...) ou un système de supervision 66.

De manière générale, dans la présente invention, et quelles que soient les perturbations détectées dans les bandes de fréquences (BF1,BF2,...) utilisées par les moyens de communication 34 de la passerelle 10, les informations statistiques (IS1,IS2,...) sont exploitées pour améliorer l'utilisation des bandes de fréquences (BF1,BF2,...).

Par exemple, l'utilisation des bandes de fréquences (BF1,BF2,...) peut être améliorée en modifiant les protocoles de communication entre la passerelle 10 et les différents appareils de mesure 12 sur les réseaux 22 à courte portée.

Selon un autre exemple, les différents appareils de mesure 12 et les modules de communication de la passerelle 10 peuvent être reprogrammés de manière à utiliser un autre type de modulation moins sensible au type de perturbation générée.

Avantageusement, les informations statistiques (IS1,IS2,...) récoltées par le module d'analyse spectrale 64 sont utilisées par un système de traitement (14-1,14-2,...) ou un système de supervision 66 pour faire un diagnostic à distance du fonctionnement, et notamment du partage, des moyens de communication 34 de la passerelle 10, ainsi que du fonctionnement des autres modules internes (38-1,38-2,...), et éventuellement externes (60-1,60-2,...), de communication de la passerelle 10 qui ne sont pas utilisés comme module d'analyse spectrale 64.

## Revendications

1. Passerelle (10) de communication, destinée à relier différents appareils de mesure (12) communicants à un ou plusieurs systèmes de traitement (14) de l'information pour réaliser une collecte d'informations à distance, la passerelle de communication (10) comprenant des moyens de connexion (26) à un réseau (24) étendu pour communiquer avec chaque système de traitement (14), la passerelle (10) comprenant des moyens de communication (34) dédiés à la communication avec différents appareils de mesure (12) sur différents réseaux (22) à courte portée, ces moyens de communication (34) comprenant des moyens de réception/émission (36), **caractérisée en ce qu'**elle comprend huit modules internes de communication (38-1 à 38-8) différents, chaque module interne de communication (38-1 à 38-8) étant capable de communiquer de manière autonome sur un réseau (22-1,22-2,...) à courte portée spécifique et différent de celui d'un autre module interne de communication (38-1 à 38-8), **en ce que** les moyens de réception/émission (36) prennent la forme de deux antennes (40,42) dont l'utilisation en réception et en émission, est partagée entre les modules internes de communication (38-1 à 38-8), dans laquelle chaque antenne (40,42) est reliée à tous les modules internes de communication (38-1 à 38-8) par un réseau (52,52') de diviseurs/combineurs (54,54',...) de puissance, le réseau (52,52') comprenant un premier diviseur/combineur (54) relié à deux diviseurs/combineurs (54') chacun reliés à deux diviseurs/combineurs (54"), les quatre derniers diviseurs/combineurs (54") étant chacun reliés à deux modules internes de communication (38-1 à 38-8), et dans laquelle un commutateur (56-1 à 56-8) est intercalé entre chaque module interne de communication (38-1 à 38-8) et les deux réseaux (52,52') de diviseurs/combineurs (54,54',...) auxquels il est relié, le fonctionnement des commutateurs (56-1 à 56-8) étant commandé par un module de gestion (50) afin d'opérer la sélection d'antennes (40,42).

2. Passerelle (10) de communication selon la revendication 1, dans laquelle chaque antenne (40,42) des moyens de réception/émission (36) est amplifiée en réception comme en émission grâce à des amplificateurs (40',42') disposés en pied de ces antennes (40,42) et dont le fonctionnement est géré par le module de gestion (50) du fonctionnement des antennes (40,42).

3. Passerelle (10) de communication selon l'une des revendications 1 ou 2, la passerelle (10) comprenant des modules externes (60-1,60-2,...) de communication pour étendre ses capacités de communication sur les réseaux (22-1,22-2,...) à courte portée, ces modules externes (60-1,60-2,...) de communication étant connectés à la passerelle (10) par l'intermédiaire de ports externes (62).

4. Procédé de collecte d'informations à distance, dans lequel une passerelle (10) de communication selon l'une des revendications 1 à 3 est utilisée pour relier des appareils de mesure (12-1,12-2,...) communicants à un système de traitement (14-1,14-2,...) centralisé de l'information, la passerelle (10) étant apte à communiquer avec des appareils de mesure (12-1,12-2,...) hétérogènes par l'intermédiaire de réseaux (22) à courte portée incompatibles, et avec différents systèmes de traitement (14-1,14-2,...) par l'intermédiaire d'un réseau (24) étendu.

5. Procédé de collecte d'informations à distance selon la revendication 4, dans lequel les communications entre les appareils de mesure (12-1,12-2,...) et les modules internes de communication (38-1,38-2,...) de la passerelle (10) sont bidirectionnelles.

6. Procédé de collecte d'informations à distance selon la revendication 5, dans lequel des messages [(M1,M1',...),(M2,M2',...),(M3,M3',...),(M4,M4',...),...] transférés, dans un sens ou dans l'autre, entre les différents appareils de mesure (12-1,12-2,...) et la passerelle (10) vont directement de ces appareils de mesure vers la passerelle, ou indirectement via un autre appareil de mesure ou un répéteur.

7. Procédé de collecte d'informations à distance selon la revendication 5 ou la revendication 6, dans lequel les communications entre la passerelle (10) et les systèmes de traitement (14-1,14-2,...) sont aussi bidirectionnelles.

8. Procédé de collecte d'informations à distance selon la revendication 7, dans lequel des messages [(M1,M1',...),(M2,M2',...),(M3,M3',...),(M4,M4',...),...] sont transférés, dans un sens ou dans l'autre, entre un ou plusieurs appareils de mesure (12-1,12-2,...) prédéterminés et un ou plusieurs systèmes de traitement (14-1,14-2,...) prédéterminés.

9. Procédé de collecte d'informations à distance selon l'une des revendications 4 à 8, dans lequel les communications entre la passerelle (10) et les systèmes de traitement (14-1,14-2,...) sont effectuées par paquets.

10. Procédé de collecte d'informations à distance selon la revendication 9, dans lequel des messages [(M1,M1',...),(M2,M2',...),(M3,M3',...),(M4,M4',...),...] transmis par différents appareils de mesure (12-1,12-2,...) et appartenant à une même famille, c'est-à-dire étant destinés à un même système de traitement (14-1,14-2,...), sont stockés, encapsulés, puis concaténés en paquets (P1,P2,...) par la passerelle (10).

11. Procédé de collecte d'informations à distance selon la revendication 10, dans lequel les paquets (P1,P2,...) ainsi créés sont compressés et cryptés par la passerelle (10) avant leur transmission vers un système de traitement (14-1,14-2,...) prédéterminé.

## Patentansprüche

1. Übergangsstelle (10) für die Kommunikation, die dazu bestimmt ist, verschiedene Messgeräte (12), die mit einem oder mehreren Verarbeitungssystemen (14)für Information kommunizieren, zu verbinden, um eine entfernte Informationserfassung zu bewerkstelligen, wobei die Übergangsstelle (10) für die Kommunikation Verbindungsmittel (26) mit einem ausgedehnten Netz (24) aufweist, um mit jedem Verarbeitungssystem (14) zu kommunizieren, und wobei die Übergangsstelle (10) Kommunikationsmittel (34) aufweist, die für die Kommunikation mit verschiedenen Messgeräten (12) über verschiedene Netze (22) kurzer Reichweite bestimmt sind, wobei die Kommunikationsmittel (34) Mittel für den Empfang/das Senden (36) aufweisen, **dadurch gekennzeichnet, dass** diese acht verschiedene interne Kommunikationsmodule (38-1 bis 38-8) aufweist, wobei jedes interne Kommunikationsmodul (38-1 bis 38-8) in der Lage ist, auf autonome Weise auf einem spezifischen Netz (22-1, 22-2,...), das sich von demjenigen eines anderen internen Kommunikationsmoduls (38-1 bis 38-8) unterscheidet, zu kommunizieren, und dass die Mittel für den Empfang/das Senden (36) als zwei Antennen (40, 42) ausgestaltet sind, deren Verwendung für den Empfang und für das Senden zwischen den internen Kommunikationsmodulen (38-1 bis 38-8) aufgeteilt ist, bei der jede Antenne (40, 42) mit allen internen Kommunikationsmodulen (38-1 bis 38-8) durch ein Netz (52, 52') von Teilern/Kopplern (54, 54',...) für die Leistung verbunden ist, wobei das Netz (52, 52') einen ersten Teiler/Koppler (54) aufweist, der mit zwei Teilern/Kopplern (54') verbunden ist, die jeweils mit zwei Teilern/Kopplern (54") verbunden sind, wobei die vier letzten Teiler/Koppler (54") jeweils mit zwei internen Kommunikationsmodulen (38-1 bis 38-8) verbunden sind, und bei der ein Umschalter (56-1 bis 56-8) zwischen jedem internen Kommunikationsmodul (38-1 bis 38-8) und den beiden Netzen (52, 52') der Teiler/Koppler (54, 54',...), mit denen dieser verbunden ist, zwischengeschaltet ist, wobei die Funktion des Umschalters (56-1 bis 56-8) durch ein Verwaltungsmodul (50) gesteuert ist, um die Auswahl der Antennen (40, 42) durchzuführen.

2. Übergangsstelle (10) für die Kommunikation nach Anspruch 1, bei der jede Antenne (40, 42) der Mittel für den Empfang/das Senden (36) beim Empfang wie beim Senden mittels Verstärkern (40', 42') verstärkt ist, die am Fuß der Antennen (40, 42) angeordnet sind und deren Funktion durch das Verwaltungsmodul (50) für die Funktion der Antennen (40, 42) gesteuert ist.

3. Übergangsstelle (10) für die Kommunikation nach einem der Ansprüche 1 oder 2, wobei die Übergangsstelle (10) externe Kommunikationsmodule (60-1, 60-2,...) aufweist, um die Kommunikationskapazitäten der Netze (22-1, 22-2,...) kurzer Reichweite zu erweitern, wobei die externen Kommunikationsmodule (60-1, 60-2,...) mit der Übergangsstelle (10) mittels externer Netzanschlüsse (62) verbunden sind.

4. Verfahren zur entfernten Informationserfassung, in der eine Übergangsstelle (10) für die Kommunikation nach einem der Ansprüche 1 bis 3 verwendet wird, um Messgeräte (12-1, 12-2,...), die mit einem zentralisierten Verarbeitungssystem (14-1, 14-2,...) für Information kommunizieren, zu verbinden, wobei die Übergangsstelle (10) dazu geeignet ist, mit heterogenen Messgeräten (12-1, 12-2,...) mittels inkompatibler Netze (22) kurzer Reichweite und mit verschiedenen Verarbeitungssystemen (14-1, 14-2,...) mittels eines ausgedehnten Netzes (24) zu kommunizieren.

5. Verfahren für die entfernte Informationserfassung nach Anspruch 4, bei dem die Kommunikation zwischen den Messgeräten (12-1, 12-2,...) und den internen Kommunikationsmodulen (38-1, 38-8,...) der Übergangsstelle (10) bidirektional ist.

6. Verfahren für die entfernte Informationserfassung nach Anspruch 5, bei dem die Nachrichten [(M1, M1',...), (M2, M2',...), (M3, M3',...), (M4, M4',...),..], die zwischen den verschiedenen Messgeräten (12-1, 12-2,...) und der Übergangsstelle (10) in die eine oder andere Richtung übertragen werden, von diesen Messgeräten unmittelbar oder mittelbar über ein anderes Messgerät oder einen Wiederholer zur Übergangsstelle laufen.

7. Verfahren für die entfernte Informationserfassung nach Anspruch 5 oder Anspruch 6, bei der die Kommunikation zwischen der Übergangsstelle (10) und den Verarbeitungssystemen (14-1, 14-2,...) ebenfalls bidirektional ist.

8. Verfahren für die entfernte Informationserfassung nach Anspruch 7, bei dem die Nachrichten [(M1, M1',...), (M2, M2',...), (M3, M3',...), (M4, M4',...),..], in die eine oder andere Richtung zwischen einem oder mehreren vorbestimmten Messgeräten (12-1, 12-2,...) und einem oder mehreren vorbestimmten Verarbeitungssystemen (14-1, 14-2,...) übertragen werden.

9. Verfahren für die entfernte Informationserfassung nach einem der Ansprüche 4 bis 8, bei dem die Kommunikation zwischen der Übergangsstelle (10) und den Verarbeitungssystemen (14-1, 14-2,...) paketweise erfolgt.

10. Verfahren für die entfernte Informationserfassung nach Anspruch 9, bei dem die Nachrichten [(M1, M1',...), (M2, M2',...), (M3, M3',...), (M4, M4',...),..], die von verschiedenen Messgeräte (12-1, 12-2,...) übertragen werden und zur gleichen Gruppe gehören, das heißt die für das gleiche Verarbeitungssystem (14-1, 14-2,...) bestimmt sind, durch die Übergangsstelle (10) gespeichert, verpackt und zu Paketen (P1, P2,...) verkettet werden.

11. Verfahren für die entfernte Informationserfassung nach Anspruch 10, bei dem die so hergestellten Pakete (P1, P2,...) durch die Übergangsstelle (10) vor deren Übertragung zu einem vorbestimmten Verarbeitungssystem (14-1, 14-2,...) komprimiert und verschlüsselt werden.

## Claims

1. A communication gateway (10), intended to connect various communicating measuring appliances (12) to one or more information processing systems (14) in order to effect a collection of information remotely, the communication gateway (10) comprising means (26) for connection to a wide area network (24) for communicating with each processing system (14), the gateway (10) comprising communication means (34) dedicated to communication with various measuring appliances (12) over various short-range networks (22), these communication means (34) comprising reception/transmission means (36), **characterised in that** it comprises eight different internal communication modules (38-1 to 38-8), each internal communication module (38-1 to 38-8) being capable of communicating autonomously over a specific short-range network (22-1, 22-2, ...) different from that of another internal communication module (38-1 to 38-8), **in that** the reception/transmission means (36) takes the form of two antennas (40, 42), the use of which, in reception and transmission, is shared between the internal communication modules (38-1 to 38-8), in which each antenna (40, 42) is connected to all the internal communication modules (38-1 to 38-8) by a network (52, 52') of power dividers/combiners (54, 54', ...), the network (52, 52') comprising a first divider/combiner (54) connected to two dividers/combiners (54') each connected to two internal communication modules (38-1 to 38-8), and in which a switch (56-1 to 56-8) is interposed between each internal communication module (38-1 to 38-8) and the two networks (52, 52') of dividers/combiners (54, 54', ...) to which it is connected, the functioning of the switches (56-1 to 56-8) being controlled by a management module (50) in order to make the selection of antennas (40, 42).

2. A communication gateway (10) according to claim 1, in which each antenna (40, 42) of the reception/transmission means (36) is amplified both in reception and in transmission by means of amplifiers (40', 42') disposed at the foot of these antennas (40, 42) and the functioning of which is managed by the module (50) managing the functioning of the antennas (40, 42).

3. A communication gateway (10) according to claim 1 or 2, the gateway (10) comprising external communication modules (60-1, 60-2, ...) for extending its communication capabilities over the short-range networks (22-1, 22-2, ...), these external communication modules (60-1, 60-2, ...) being connected to the gateway (10) by means of external ports (62).

4. A method for collecting information remotely, in which a communication gateway (10) according to any of claims 1 to 3 is used to connect communicating measuring appliances (12-1, 12-2, ...) to a centralised information processing system (14-1, 14-2, ...), the gateway (10) being able to communicate with heterogeneous measuring appliances (12-1, 12-2, ...) by means of incompatible short-range networks (22) and with various processing systems (14-1, 14-2, ...) by means of a wide area network (24) .

5. A method for collecting information remotely according to claim 4, in which the communications between the measuring appliances (12-1, 12-2, ...) and the internal communication modules (38-1, 38-2, ...) of the gateway (10) are bidirectional.

6. A method for collecting information remotely according to claim 5, in which messages [(M1, M1', ...), (M2, M2', ...), (M3, M3', ...), (M4, M4', ...)] transferred, in one direction or the other, between the various measuring appliances (12-1, 12-2, ...) and the gateway (10) go directly from these measuring appliances to the gateway, or indirectly via another measuring appliance or a repeater.

7. A method for collecting information remotely according to claim 5 or claim 6, in which the communications between the gateway (10) and the processing systems (14-1, 14-2, ...) are also bidirectional.

8. A method for collecting information remotely according to claim 7, in which messages [(M1, M1', ...), (M2, M2', ...), (M3, M3', ...), (M4, M4', ...)] are transferred, in one direction or the other, between one or more predetermined measuring appliances (12-1, 12-2, ...) and one or more predetermined processing systems (14-1, 14-2, ...) .

9. A method for collecting information remotely according to any of claims 4 to 8, in which the communications between the gateway (10) and the processing systems (14-1, 14-2, ...) take place in packets.

10. A method for collecting information remotely according to claim 9, in which messages [(M1, M1', ...), (M2, M2', ...), (M3, M3', ...), (M4, M4', ...)] transmitted by various measuring appliances (12-1, 12-2, ...) and belonging to the same family, that is to say being intended for the same processing system (14-1, 14-2, ...), are stored, encapsulated and then concatenated in packets (P1, P2, ...) by the gateway (10).

11. A method for collecting information remotely according to claim 10, in which the packets (P1, P2, ...) thus created are compressed and encrypted by the gateway (10) before they are transmitted to a predetermined processing system (14-1, 14-2, ...).
